# FASCICULE DE BREVET EUROPEEN

(11) **EP 2 615 709 B1**
(45) Date de publication et mention de la délivrance du brevet: **07.01.2015**
(21) Numéro de dépôt: 13150997.8
(22) Date de dépôt: 11.01.2013
(51) Int. Cl.: H02G 3/14

(54) **Appareillage électrique pour boîte d'encastrement**
Elektrisches Gerät für Einbaugehäuse
Electrical switchgear for recessed box

(30) Priorité: 13.01.2012 FR 1250369
(43) Date de publication de la demande: 17.07.2013
(73) Titulaire: Legrand France, 87000 Limoges (FR); Legrand SNC, 87000 Limoges (FR)
(72) Inventeur: Hardoin, Grégory, 87220 FEYTIAT (FR)
(74) Mandataire: Santarelli

(56) Documents cités:
- EP-A1- 0 777 245
- EP-A1- 2 385 598
- EP-A2- 1 291 994
- DE-A1-102008 015 128

## Description

### DOMAINE DE L'INVENTION

L'invention a trait aux appareillages électriques pour boîte d'encastrement.

### ARRIERE PLAN TECHNOLOGIQUE

On sait que les appareillages électriques de ce type comportent un mécanisme à fixer à la boîte d'encastrement et une façade montée sur le mécanisme, laquelle façade comporte une portion en débord du mécanisme, avec le mécanisme qui est configuré pour se loger dans la boîte d'encastrement en place sur une cloison et avec la portion de la façade qui est en débord du mécanisme qui vient en regard de la cloison autour de la boîte d'encastrement.

En général, la façade d'un tel appareillage électrique comporte un élément central monté sur le mécanisme, par exemple la touche de commande d'un interrupteur ou l'enjoliveur central d'une prise de courant, et une plaque de support dont fait partie la portion de la façade qui est en débord par rapport au mécanisme.

En principe, l'avant de la boîte d'encastrement est à fleur de la surface de la cloison dans laquelle est mise en place la boîte d'encastrement. Dans ce cas, lorsque le mécanisme est fixé à la boîte d'encastrement, la façade vient juste contre la surface de la cloison.

Pour éviter que la façade soit à l'écart de la surface de la cloison lorsque l'avant de la boîte d'encastrement est en saillie par rapport à la cloison, ou pour éviter des difficultés voire des impossibilités de montage lorsque l'avant de la boîte d'encastrement est en retrait par rapport à la surface de la cloison, on a déjà proposé de prévoir plusieurs positions de fixation de la façade par rapport au mécanisme.

Une telle solution donne satisfaction mais il subsiste en général un jour entre la façade et la surface de la cloison.

### OBJET DE L'INVENTION

L'invention vise à fournir un appareillage électrique qui soit capable d'éviter un tel jour tout en étant simple, commode et économique.

L'invention propose à cet effet un appareillage électrique pour boîte d'encastrement, comportant un mécanisme à fixer à la boîte d'encastrement et une façade montée sur le mécanisme, laquelle façade comporte une portion en débord du mécanisme, avec ledit mécanisme qui est configuré pour se loger dans la boîte d'encastrement en place sur une cloison et avec la portion en débord de la façade qui est configurée pour venir en regard de la cloison autour de la boîte d'encastrement ; **caractérisé en ce que** la façade comporte comme élément le plus en arrière de ladite portion en débord, exclusivement un rebord flexible, en forme de bande, longeant la périphérie de la façade, lequel rebord flexible est incliné vers l'arrière et vers l'intérieur en l'absence de sollicitation, ledit rebord flexible étant configuré pour fléchir vers l'intérieur et vers l'avant au contact d'une surface située en arrière de la façade lorsque la façade se rapproche de cette surface.

Du fait que le rebord flexible est l'élément le plus en arrière de la portion de la façade qui est en débord du mécanisme, c'est par le rebord flexible que la façade entre en contact avec la cloison lorsque la façade est rapprochée de la cloison.

Pour toutes les positions relatives de la façade et de la cloison depuis une position où le rebord flexible est juste au contact de la surface de la cloison (et est donc encore sensiblement en position de repos) à une position où la façade est rapprochée au maximum de la cloison, le rebord flexible masque le jour entre la façade et la cloison.

L'aspect offert par l'appareillage électrique est donc optimal dans cette plage de positions relatives de la façade et de la cloison.

Du fait de l'orientation rentrante que présente le rebord flexible au repos, le rebord flexible garde une orientation rentrante, c'est-à-dire qu'il reste incliné vers l'arrière et vers l'intérieur.

Cela est favorable à la discrétion du rebord flexible.

On notera que l'on connaissait déjà, notamment par la demande de brevet britannique GB 2346483 ou par la demande de brevet européen EP 0 777 245, des appareillages électriques munis d'un joint d'étanchéité aux liquides prévu pour être en appui sur la surface de la cloison sur laquelle est mis en place cet appareillage électrique. Dans chacun de ces appareils, le joint d'étanchéité aux liquides comporte plusieurs lèvres et/ou une lèvre à orientation sortante.

De tels joints ne pourraient donc pas masquer un jour vis-à-vis de la cloison sur une plage de positions aussi étendue et de façon aussi discrète que peut le faire l'appareillage électrique selon l'invention grâce à la combinaison du fait que l'élément le plus en arrière de la portion en débord est exclusivement le rebord flexible et du fait que le rebord flexible est orienté au repos avec une inclinaison vers l'arrière et vers l'intérieur.

Selon des caractéristiques préférées pour la simplicité et la commodité de mise en oeuvre qu'elles offrent :
- en position de repos, ledit rebord flexible est en saillie à partir d'une surface arrière d'un élément rigide que comporte la façade, avec ladite surface arrière qui forme une surface de butée fixant la position de rapprochement maximum de la façade vis-à-vis de la surface située en arrière de la façade ;
- ledit rebord flexible fait partie d'un joint périphérique comportant une semelle longeant du côté interne ledit élément rigide ;
- ladite semelle est logée dans un renfoncement dudit élément rigide ; et/ou
- ladite semelle comporte un bourrelet et une réglette s'étendant entre le bourrelet et le rebord flexible, avec le bourrelet qui s'étend davantage vers l'intérieur que la réglette grâce à quoi la semelle présente, à l'arrière du bourrelet, un épaulement s'étendant entre la surface interne du bourrelet et la surface interne de la réglette, le rebord flexible se raccordant à la semelle par l'extrémité de la réglette opposée au bourrelet.

Selon d'autres caractéristiques préférées comme étant favorables à la qualité du masquage du jour entre la cloison et la façade de l'appareillage électrique :
- ledit rebord flexible longe continûment la périphérie de la façade ;
- ledit rebord flexible comporte dans au moins un coin une portion plus mince que le reste du rebord flexible avec de part et d'autre de ladite portion plus mince une portion de transition où l'épaisseur du rebord flexible varie progressivement de l'épaisseur de la portion plus mince jusqu'à l'épaisseur du reste du rebord flexible ;
- la portion plus mince est courbée en position de repos du rebord flexible ; et/ou
- ledit rebord flexible est rectangulaire avec une dite portion plus mince dans chaque coin.

Dans un mode de réalisation de l'appareillage électrique suivant l'invention, il forme un interrupteur électrique avec ladite façade qui comporte une touche de commande et une plaque de support sur laquelle est montée la touche de commande.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective montrant l'avant et un côté d'un interrupteur électrique conforme à l'invention ;
- la figure 2 est une vue en perspective montrant l'arrière de la plaque que comporte la façade de cet interrupteur électrique ;

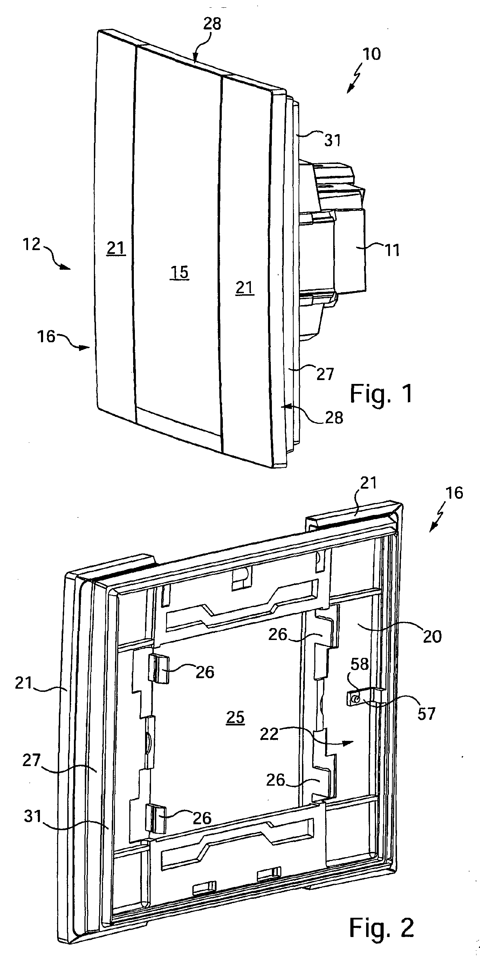

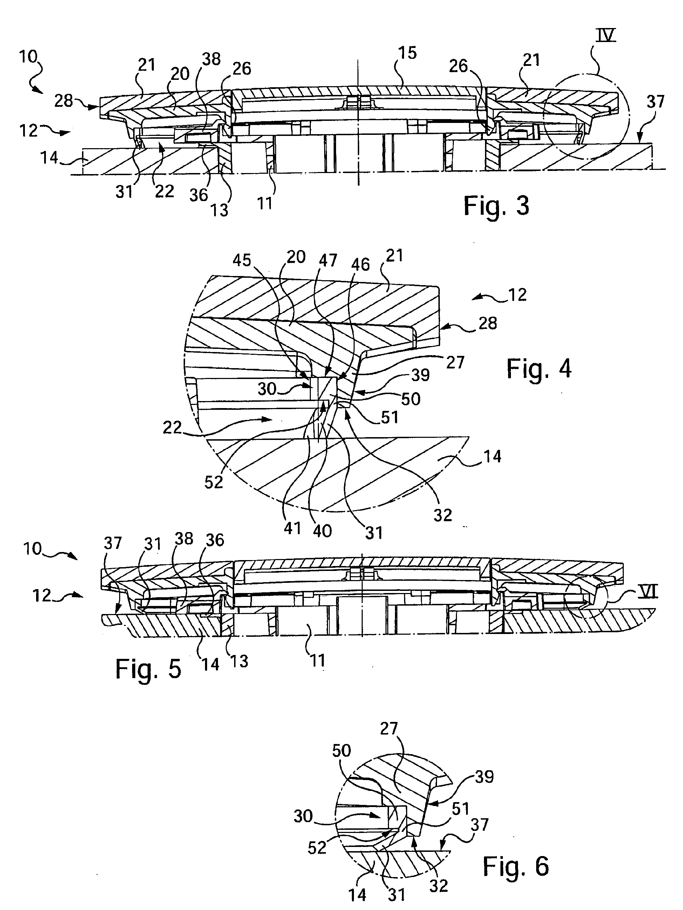

- la figure 3 est une vue en coupe montrant une cloison, une boîte d'encastrement en place dans cette cloison et l'interrupteur électrique illustré sur la figure 1 installé dans cette boîte d'encastrement, avec l'avant de la boîte d'encastrement qui est en saillie par rapport à la surface de la cloison de sorte que la plaque de l'interrupteur électrique ne peut pas être rapprochée de la cloison davantage que la position illustrée, dans laquelle le rebord flexible de la face arrière de la plaque est juste au contact de la surface de la cloison en restant dans sa position de repos, c'est-à-dire dans la position qu'il adopte en l'absence de sollicitation (position qu'il prend par exemple sur les figures 1 et 2) ;
- la figure 4 est un agrandissement du détail repéré par IV sur la figure 3 ;
- les figures 5 et 6 sont des vues semblables aux figures 3 et 4 mais avec l'avant de la boîte d'encastrement qui est à fleur de la surface de la cloison, de sorte que la plaque de l'interrupteur électrique est plus proche de la surface de la cloison et le rebord flexible est dans une position où, par rapport à sa position de repos, il a fléchi vers l'intérieur et vers l'avant ;
- les figures 7 et 8 sont des vues semblables aux figures 5 et 6, mais pour une configuration dans laquelle l'avant de la boîte d'encastrement est en retrait par rapport à la surface de la cloison et dans laquelle la plaque de l'interrupteur électrique est rapprochée au maximum de la surface de la cloison, le rebord flexible étant en conséquence fléchi au maximum vers l'avant et vers l'intérieur ;
- les figures 9 et 10 sont des agrandissements de la figure 2 montrant respectivement le voisinage du coin du rebord flexible que l'on voit en haut à gauche et le voisinage du coin du rebord flexible que l'on voit en haut à droite ;
- la figure 11 est une vue semblable à la figure 4, mais prise suivant un plan de coupe différent ; et
- la figure 12 est une vue en coupe semblable à la figure 4 mais sans que la cloison soit illustrée, pour une variante du profil du rebord flexible.

### DESCRIPTION DETAILLEE D'EXEMPLES DE REALISATION

L'interrupteur électrique 10 illustré sur la figure 1 comporte un mécanisme 11 et une façade 12.

D'une façon générale, le mécanisme 11 est configuré pour être logé dans une boîte d'encastrement 13 (figure 3) mise en place dans une cloison 14 tandis que la façade 12 reste en avant de la cloison 14. Plus précisément, une portion de la façade 12 en débord du mécanisme 11 est prévue pour être en regard de la cloison 14 autour de la boîte d'encastrement 13 lorsque le mécanisme 11 est fixé à la boîte d'encastrement 13.

La façade 12 comporte une touche de commande 15 et une plaque de support 16.

La plaque de support 16 est montée sur le mécanisme 11. Ici, la touche de commande 15 est montée sur la plaque de support 16.

La plaque de support 16 comporte un corps 20, deux bandeaux avant 21 et un joint périphérique 22.

La touche de commande 15 s'étend sur toute la hauteur de la façade 12. Le reste de la face avant de la façade 12 est formé à gauche et à droite de la touche de commande 15 par l'un et l'autre des bandeaux avant 21.

La touche de commande 15 et les bandeaux avant 21 sont en matière plastique moulée relativement rigide présentant une bonne qualité d'aspect.

Le corps 20 est en matière plastique moulée relativement rigide.

Ici, les bandeaux avant 21 sont assemblés sur le corps 20 ; la touche de commande 15 est montée sur le corps 20 vis-à-vis duquel la touche de commande 15 est articulée par l'une de ses extrémités ; et la surface de la touche de commande 15 est à fleur de la surface des bandeaux avant 21.

Le corps 20 est en forme générale de cadre avec une ouverture centrale 25 au travers de laquelle la touche de commande 15 est reliée au mécanisme 11. A proximité de l'ouverture centrale 25, le corps 20 présente des pattes d'encliquetage 26 servant au montage de la plaque de support 16 sur le mécanisme 11 (voir la figure 3).

Le corps 20 présente une nervure périphérique 27 qui saille vers l'arrière.

Ici, la nervure périphérique 27 est en retrait par rapport à la tranche latérale 28 de l'ensemble formé par la touche de commande 15 et par les bandeaux avant 21.

Le joint 22 est en matière plastique relativement flexible.

Il comporte une semelle 30 bordant la nervure 27 du côté interne et une lèvre fine ou rebord 31, en forme de bande, flexible, porté par la semelle 30, saillant vers l'arrière à partir de la tranche arrière 32 de la nervure 27.

Au repos, c'est-à-dire en l'absence de sollicitation (figures 1 et 2), le rebord 31 est orienté rentrant, c'est-à-dire qu'il est incliné vers l'arrière et vers l'intérieur.

La figure 3 montre l'interrupteur 10 installé dans une boîte d'encastrement 13 ayant à l'avant une collerette 36 qui est en saillie par rapport à la surface 37 de la cloison 14.

Le mécanisme 11 comporte un cadre avant 38 qui sert de butée d'enfoncement dans la boîte d'encastrement 13 lorsque sont serrées des vis qui servent à fixer le mécanisme 11 à la boîte d'encastrement 13.

Ainsi, le cadre 38 du mécanisme 11 est en appui sur la collerette avant 36 de la boîte d'encastrement 13.

La plaque de support 16 de la façade 12 ne peut donc être rapprochée davantage de la surface 37 de la cloison 14.

Du fait que la collerette avant 36 de la boîte d'encastrement 13 est en saillie par rapport à la surface 37 de la cloison 14, il existe un écart relativement important entre la surface 37 et la plaque de support 16.

La position illustrée sur les figures 3 et 4 est telle que le rebord flexible 31 est juste au contact de la surface 37 de la cloison 14 en restant dans sa position de repos, c'est-à-dire dans la position qu'il adopte en l'absence de sollicitation (position qu'il prend par exemple sur les figures 1 et 2).

Dans la configuration illustrée sur les figures 5 et 6, la collerette avant 36 de la boîte d'encastrement 13 est à fleur de la surface 37 de la cloison 14.

Le cadre 38 du mécanisme 11 est alors en appui à la fois sur la collerette avant 36 et sur la surface 37 de la cloison 14.

La plaque de support 16 est plus proche de la surface 37 que dans la configuration des figures 3 et 4.

Par conséquent, le rebord flexible 31, entre sa position de repos et la position illustrée sur les figures 5 et 6, a été entraîné à fléchir, au contact de la surface 37, vers l'avant.

Du fait de l'orientation rentrante que présente le rebord flexible 31 au repos, le rebord 31 garde une orientation rentrante, c'est-à-dire qu'il reste incliné vers l'arrière et vers l'intérieur. L'inclinaison du rebord 31 est plus forte dans la configuration des figures 5 et 6 qu'en position de repos.

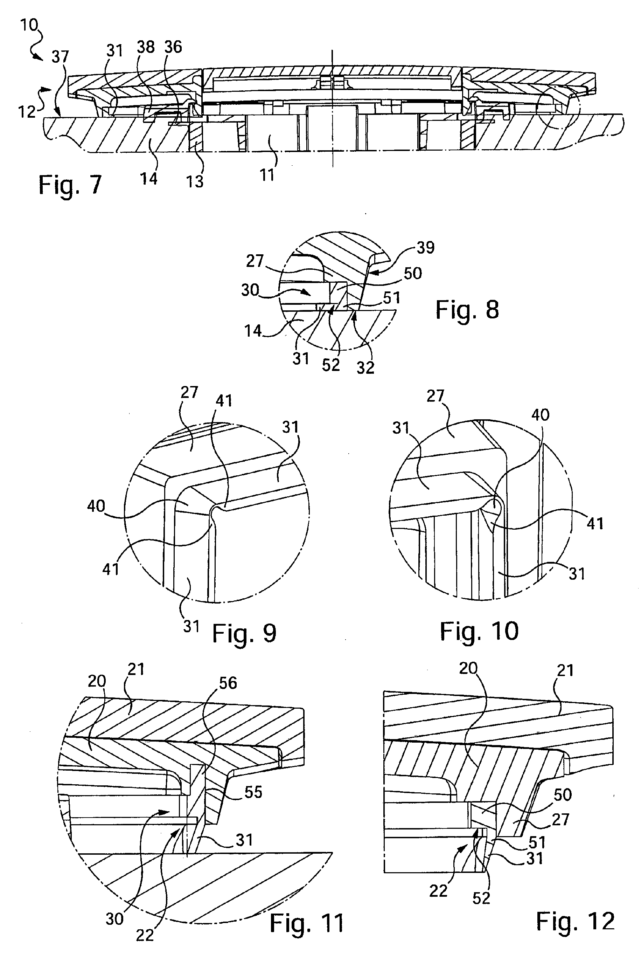

Dans la configuration des figures 7 et 8, la collerette avant 36 de la boîte d'encastrement 13 est en retrait par rapport à la surface 37 de la cloison 14, par exemple parce que l'on a mis en place la boîte d'encastrement 13 dans la cloison 14 avant que soit posé un revêtement tel que du papier peint.

Sur la figure 7, on suppose qu'il existe un tel revêtement et que celui-ci a pu être écrasé par le cadre 38 du mécanisme 11 pour permettre au cadre 38 de venir contre la collerette avant 36 de la boîte d'encastrement 13.

La plaque de support 16 est alors rapprochée au maximum de la surface 37 de la cloison 14. La position de rapprochement maximum est fixée ici par la venue en butée de la tranche arrière 32 de la nervure 27 contre la surface 37 de la cloison 14.

Le rebord flexible 31 est alors courbé au maximum, dans une position où il ne fait plus saillie par rapport à la tranche arrière 32 de la nervure 27.

On observera, comme on le voit plus particulièrement sur la figure 2, que l'élément le plus en arrière de la portion de la façade 12 qui est en débord du mécanisme 11, est le rebord flexible 31. C'est par conséquent par le rebord flexible 31 que la façade 12 entre en contact avec la cloison 14 lorsque la façade 12 est rapprochée de la cloison 14.

Grâce au rebord flexible 31, pour toutes les positions relatives de la façade 12 et de la cloison 14 situées entre la position montrée sur les figures 3 et 4 (rebord flexible 31 en position de repos) et la position montrée sur les figures 7 et 8 (rebord flexible 31 courbé au maximum), il n'y a pas de jour entre la façade 12 et la cloison 14.

L'aspect offert par l'interrupteur électrique 10 est donc optimal dans la plage de positions relatives vis-à-vis de la cloison 14 allant de la position illustrée sur les figures 3 et 4 à la position illustrée sur les figures 7 et 8.

On observera que cette plage de valeurs est relativement étendue de part et d'autre de la position de référence illustrée sur les figures 5 et 6, où l'avant de la boîte d'encastrement 13 est à fleur de la surface 37 de la cloison 14.

Comme on le voit plus particulièrement sur les figures 4, 6 et 8, le rebord flexible 31 est plus à l'intérieur que la surface latérale extérieure 39 de la nervure 27 dans sa position de repos (figure 4) et a fortiori dans ses positions fléchies (figures 6 et 8).

Ce caractère plus interne du rebord 31 par rapport à la surface 39 de la nervure 27 est favorable à la discrétion du rebord flexible 31.

Ici, pour rendre le rebord flexible 31 aussi discret que possible, le rebord 31 est de la même couleur que le corps 20 de la plaque de support 16.

Ici, la nervure 27 et la tranche 28 de l'ensemble formé par la touche de commande 15 et par les bandeaux avant 21 sont en forme de rectangle avec un côté gauche, un côté haut, un côté droit et un côté bas.

Le retrait entre la surface latérale extérieure 39 de la nervure périphérique 27 et la tranche 28 est plus important à droite et à gauche qu'en haut et en bas.

Pour que l'absence de jour entre la surface 37 de la cloison 14 et la façade 12 soit complète, la nervure périphérique 27 est continue et le rebord flexible 31 porté par la nervure 27 par l'intermédiaire de la semelle 30 est continu comme la nervure 27, y compris dans les coins, comme on le voit plus particulièrement sur les figures 9 et 10.

Pour que le rebord flexible 31 puisse tout à la fois être continu dans les coins et être capable de fléchir vers l'intérieur, le rebord flexible 31 présente dans chaque coin une portion 40 plus mince que le reste du rebord flexible 31, avec de part et d'autre de chaque portion plus mince 40 une portion de transition 41 où l'épaisseur du rebord flexible varie progressivement de l'épaisseur de la portion plus mince 40 jusqu'à l'épaisseur du reste du rebord flexible 31.

Ici, la portion plus mince 40 est courbée (elle n'est pas en angle droit) et sa largeur diminue depuis la racine jusqu'à l'extrémité libre du rebord flexible 31. Ici, la portion plus mince 40 est en forme de tronc de secteur angulaire courbé.

On observera que cette forme convient particulièrement bien en raison de l'inclinaison du rebord flexible 31.

La description qui vient d'être faite de la portion plus mince 40 a été donnée dans la position de repos du rebord flexible 31.

Du fait de sa faible épaisseur et de la flexibilité de la matière du rebord 31, lorsque le rebord 31 fléchit vers l'intérieur, la portion plus mince 40 se plie en plusieurs parties qui se superposent.

Ainsi qu'indiqué ci-dessus, le rebord flexible 31 qui saille vers l'arrière à partir de la tranche arrière 32 de la nervure périphérique 27, est porté par une semelle 30 bordant la nervure 27 du côté interne.

La semelle 30 est logée dans un renfoncement 45 de la nervure 27 délimité vers l'extérieur par une surface 46 et vers l'avant par une surface 47.

La semelle 30 comporte un bourrelet 50 et une réglette 51 s'étendant entre le bourrelet 50 et le rebord flexible 31.

Ici, le bourrelet 50 et la réglette 51 sont délimités vers l'extérieur par une surface au contact de la surface 46 du renfoncement 45.

Vers l'avant, le bourrelet 50 est délimité par une surface au contact de la surface 47 du renfoncement 45.

Le bourrelet 50 s'étend davantage vers l'intérieur que la réglette 51.

La semelle 30 présente ainsi, à l'arrière du bourrelet 50, un épaulement 52 s'étendant entre la surface interne du bourrelet 50 et la surface interne de la réglette 51.

Le rebord flexible 31 se raccorde à la semelle 30 par l'extrémité de réglette 51 opposée au bourrelet 50.

L'épaisseur de la réglette 51 est la même que l'épaisseur du rebord flexible 31.

Lorsque le rebord 31 fléchit vers l'intérieur et vers l'avant, il se déforme pour l'essentiel au niveau de sa jonction avec la réglette 51, cette jonction ayant un rôle semblable à celui d'une charnière.

L'épaulement 52 délimitant le bourrelet 50 vers l'arrière forme une surface de butée délimitant la position fléchie au maximum du rebord 31 (figure 8).

L'épaulement 52 est en retrait vers l'avant par rapport à la tranche 32 de la nervure 27 d'une distance correspondant à l'épaisseur du rebord flexible 31.

Ainsi, en position entièrement fléchie (figure 8), le rebord 31 est à fleur de la tranche 32.

Ici, le joint périphérique 22 est surmoulé sur le corps 20.

Le fait que les surfaces 46 et 47 par lesquelles la semelle 30 est au contact du corps 20 soient relativement importantes facilite la liaison entre le joint 22 et le corps 20.

Pour améliorer cette liaison, il est prévu par endroits, dans le corps 27, comme on le voit sur la figure 11, des puits 55 dans chacun desquels se loge un doigt 56 du joint 22.

De même, la semelle 30 se raccorde à une languette 57 (figure 2) qui s'étend vers l'intérieur, la languette 57 étant surmoulée sur le corps 20.

Un téton 58 est en saillie vers l'arrière au voisinage de l'extrémité de la languette 57 située du côté interne.

La languette 57 et le téton 58 sont comprimés entre la plaque de support 16 et le cadre 38 du mécanisme 11 lorsque les pattes d'encliquetage sont en place, ce qui est favorable à la qualité du maintien par encliquetage entre la plaque de support 16 et le mécanisme 11.

Dans la variante illustrée sur la figure 12, le rebord flexible 31 n'est pas d'épaisseur constante mais présente une épaisseur qui va en diminuant vers son extrémité libre.

Dans cette variante, le rebord flexible 31 fléchit vers l'intérieur en se déformant sur sa largeur en outre de pivoter au niveau de sa jonction avec la réglette 51.

Dans une variante non représentée, le rebord flexible présente un autre profil que rectangulaire ou triangulaire, par exemple courbé du côté interne et/ou du côté externe.

Dans d'autres variantes non représentées :
- la semelle du joint périphérique et la nervure qui porte le joint périphérique sont agencées différemment de la semelle 30 et de la nervure 27, avec par exemple le bourrelet 50 et le renfoncement 45 qui sont remplacés par des rainures ménagées dans la nervure et des languettes de la semelle engagées dans ces nervures ;
- la nervure qui porte le joint périphérique est agencée différemment de la nervure 27 par rapport au reste de la façade, avec par exemple la surface latérale extérieure de la nervure qui fait partie de la tranche latérale de la façade 12 ou alors le retrait entre la tranche latérale de la façade et la surface latérale extérieure de la nervure qui est constant ;
- la façade est agencée différemment de la façade 12, avec par exemple la touche de commande 15 qui est montée sur le mécanisme 11 plutôt que sur la plaque de support 16 et/ou avec la touche de commande 15 qui est remplacée par une touche de commande centrale et les bandeaux avant 21 qui sont remplacés par un cadre entourant la touche de commande ; et/ou
- l'appareillage électrique que constitue l'interrupteur 10 est remplacé par un appareillage électrique d'un type différent, par exemple un variateur ayant une touche de commande centrale, ou une prise de courant à enjoliveur central entourée par un cadre d'aspect.

## Revendications

1. Appareillage électrique pour boîte d'encastrement (13), comportant un mécanisme (11) à fixer à la boîte d'encastrement (13) et une façade (12) montée sur le mécanisme (11), laquelle façade (12) comporte une portion en débord du mécanisme (11), avec ledit mécanisme (11) qui est configuré pour se loger dans la boîte d'encastrement (13) en place sur une cloison (14) et avec la portion en débord de la façade (12) qui est configurée pour venir en regard de la cloison (14) autour de la boîte d'encastrement (13) ; **caractérisé en ce que** la façade (12) comporte comme élément le plus en arrière de ladite portion en débord, exclusivement un rebord flexible (31), en forme de bande, longeant la périphérie de la façade (12), lequel rebord flexible (31) est incliné vers l'arrière et vers l'intérieur en l'absence de sollicitation, ledit rebord flexible (31) étant configuré pour fléchir vers l'intérieur et vers l'avant au contact d'une surface (37) située en arrière de la façade (12) lorsque la façade (12) se rapproche de cette surface (37).

2. Appareil selon la revendication 1, **caractérisé en ce que**, en position de repos, ledit rebord flexible (31) est en saillie à partir d'une surface arrière (32) d'un élément rigide (27) que comporte la façade (12), avec ladite surface arrière (32) qui forme une surface de butée fixant la position de rapprochement maximum de la façade (12) vis-à-vis de la surface (37) située en arrière de la façade (12).

3. Appareillage selon la revendication 2, **caractérisé en ce que** ledit rebord flexible (31) fait partie d'un joint périphérique (22) comportant une semelle (30) longeant du côté interne ledit élément rigide (27).

4. Appareillage selon la revendication 3, **caractérisé en ce que** ladite semelle (30) est logée dans un renfoncement (45) dudit élément rigide (27).

5. Appareillage selon la revendication 4, **caractérisé en ce que** ladite semelle (30) comporte un bourrelet (50) et une réglette (51) s'étendant entre le bourrelet (50) et le rebord flexible (31), avec le bourrelet (50) qui s'étend davantage vers l'intérieur que la réglette (51) grâce à quoi la semelle (30) présente, à l'arrière du bourrelet (50), un épaulement (52) s'étendant entre la surface interne du bourrelet (50) et la surface interne de la réglette (51), le rebord flexible (31) se raccordant à la semelle (30) par l'extrémité de la réglette (51) opposée au bourrelet (50).

6. Appareillage selon l'une quelconque des revendications 1 à 5, **caractérisé en ce que** ledit rebord flexible (31) longe continûment la périphérie de la façade (12).

7. Appareillage selon la revendication 6, **caractérisé en ce que** ledit rebord flexible (31) comporte dans au moins un coin une portion (40) plus mince que le reste du rebord flexible (31) avec de part et d'autre de ladite portion plus mince (40) une portion de transition (41) où l'épaisseur du rebord flexible varie progressivement de l'épaisseur de la portion plus mince (40) jusqu'à l'épaisseur du reste du rebord flexible (31).

8. Appareillage selon la revendication 7, **caractérisé en ce que** la portion plus mince est courbée en position de repos du rebord flexible (31).

9. Appareillage selon l'une quelconque des revendications 7 ou 8, **caractérisé en ce que** ledit rebord flexible (31) est rectangulaire avec une dite portion plus mince (40) dans chaque coin.

10. Appareillage électrique selon l'une quelconque des revendications 1 à 9, **caractérisé en ce qu'il** forme un interrupteur électrique avec ladite façade (12) qui comporte une touche de commande (15) et une plaque de support (16) sur laquelle est montée la touche de commande (15).

## Patentansprüche

1. Elektro-Installationsgerät für Unterputzdose (13) mit einem an der Unterputzdose (13) zu befestigenden Mechanismus (11) und einer auf dem Mechanismus (11) montierten Frontblende (12), wobei die Frontblende (12) einen über den Mechanismus (11) hinausragenden Teil aufweist, wobei der Mechanismus (11) ausgeführt ist, um in der in einer Wand (14) eingelassenen Unterputzdose (13) aufgenommen zu werden, und wobei der überstehende Teil der Frontblende (12) ausgeführt ist, um gegenüber der Wand (14) um die Unterputzdose (13) herum angeordnet zu sein, **dadurch gekennzeichnet, dass** die Frontblende (12) als das am weitesten hinter dem überstehenden Teil liegende Element ausschließlich eine dem Umfang der Frontblende (12) folgende, streifenförmige flexible Kante (31) aufweist, wobei die flexible Kante (31) bei fehlender Beanspruchung nach hinten und nach innen geneigt ist, wobei die flexible Kante (31) ausgeführt ist, um sich im Kontakt mit einer hinter der Frontblende (12) liegenden Fläche (37) nach innen und nach vorne zu biegen, wenn die Frontblende (12) sich dieser Fläche (37) annähert.

2. Installationsgerät nach Anspruch 1,
**dadurch gekennzeichnet, dass** die flexible Kante (31) in Ruhestellung von einer Rückseite (32) eines die Frontblende (12) umfassenden starren Elements (27) vorspringt, wobei die Rückseite (32) eine Anschlagsfläche bildet, die die maximale Annäherungsposition der Frontblende (12) gegenüber der hinter der Frontblende (12) liegenden Fläche (37) bestimmt.

3. Installationsgerät nach Anspruch 2,
**dadurch gekennzeichnet, dass** die flexible Kante (31) Teil einer umlaufenden Dichtung (22) ist, die eine Sohle (30) aufweist, die an der Innenseite des starren Elements (27) entlangläuft.

4. Installationsgerät nach Anspruch 3,
**dadurch gekennzeichnet, dass** die Sohle (30) in einer Vertiefung (45) des starren Elements (27) aufgenommen ist.

5. Installationsgerät nach Anspruch 4,
**dadurch gekennzeichnet, dass** die Sohle (30) eine Verdickung (50) und eine Leiste (51) aufweist, die zwischen der Verdickung (50) und der flexiblen Kante (31) verläuft, wobei sich die Verdickung (50) weiter nach innen erstreckt als die Leiste (51), wodurch die Sohle (30) hinter der Verdickung (50) einen Absatz (52) aufweist, der sich zwischen der Innenseite der Verdickung (50) und der Innenseite der Leiste (51) erstreckt, wobei die flexible Kante (31) durch das der Verdickung (50) entgegengesetzte Ende der Leiste (51) mit der Sohle (30) verbunden ist.

6. Installationsgerät nach einem der Ansprüche 1 bis 5,
**dadurch gekennzeichnet, dass** die flexible Kante (31) kontinuierlich am Umfang der Frontblende (12) entlangläuft.

7. Installationsgerät nach Anspruch 6,
**dadurch gekennzeichnet, dass** die flexible Kante (31) in wenigstens einer Ecke einen Abschnitt (40) aufweist, der schmäler ist als der restliche Teil der flexiblen Kante (31), mit einem Übergangsteil (41) beiderseits des schmäleren Abschnitts (40), wo sich die Dicke der flexiblen Kante allmählich von der Dicke des schmäleren Abschnitts (40) bis zur Dicke des restlichen Teils der flexiblen Kante (31) verändert.

8. Installationsgerät nach Anspruch 7,
**dadurch gekennzeichnet, dass** der schmälere Abschnitt in der Ruhestellung der flexiblen Kante (31) gebogen ist.

9. Installationsgerät nach einem der Ansprüche 7 oder 8,
**dadurch gekennzeichnet, dass** die flexible Kante (31) rechteckig ist mit einem schmäleren Abschnitt (40) in jeder Ecke.

10. Installationsgerät nach einem der Ansprüche 1 bis 9,
**dadurch gekennzeichnet, dass** das Gerät mit der Frontblende (12) einen Schalter bildet, die eine Betätigungstaste (15) und eine Trägerplatte (16) umfasst, auf der die Betätigungstaste (15) angebracht ist.

## Claims

1. Electrical apparatus for a flush-mounting box (13), comprising a mechanism (11) to be attached to the flush-mounting box (13) and a facade (12) mounted on the mechanism (11), which facade (12) comprises a portion projecting beyond the mechanism (11), with said mechanism (11) which is configured to be accommodated in the flush-mounting box (13) positioned on a partition (14) and with the projecting portion of the facade (12) which is configured to come opposite the partition (14) around the flush-mounting box (13); **characterised in that** the facade (12) exclusively comprises, as the rearmost element of said projecting portion, a flexible edge (31), in the form of a strip, running along the periphery of the facade (12), which flexible edge (31) is inclined towards the rear and towards the inside in the absence of stress, said flexible edge (31) being configured to bend towards the inside and towards the front into contact with a surface (37) located behind the facade (12) when the facade (12) approaches said surface (37).

2. Appliance according to claim 1, **characterised in that**, in the resting position, said flexible edge (31) projects from a rear surface (32) of a rigid element (27) included in the facade (12), with said rear surface (32) which forms a stop surface setting the position of maximum approach of the facade (12) with respect to the surface (37) located behind the facade (12).

3. Apparatus according to claim 2, **characterised in that** said flexible edge (31) is part of a peripheral seal (22) comprising a base (30) running along the inner side of said rigid element (27).

4. Apparatus according to claim 3, **characterised in that** said base (30) is accommodated in a recess (45) in said rigid element (27).

5. Apparatus according to claim 4, **characterised in that** said base (30) comprises a bead (50) and a strip (51) extending between the bead (50) and the flexible edge (31), with the bead (50) which extends further towards the inside than the strip (51), whereby the base (30) has, behind the bead (50), a shoulder (52) extending between the inner surface of the bead (50) and the inner surface of the strip (51), the flexible edge (31) connecting to the base (30) via the opposite end of the strip (51) to the bead (50).

6. Apparatus according to any of claims 1 to 5, **characterised in that** said flexible edge (31) runs continuously along the periphery of the facade (12).

7. Apparatus according to claim 6, **characterised in that** said flexible edge (31) comprises in at least one corner a portion (40) which is thinner than the rest of the flexible edge (31) with, on either side of said thinner portion (40), a transitional portion (41) where the thickness of the flexible edge varies progressively from the thickness of the thinner portion (40) up to the thickness of the rest of the flexible edge (31).

8. Apparatus according to claim 7, **characterised in that** the thinner portion is curved in the resting position of the flexible edge (31).

9. Apparatus according to either claim 7 or claim 8, **characterised in that** said flexible edge (31) is rectangular with one said thinner portion (40) in each corner.

10. Electrical apparatus according to any of claims 1 to 9, **characterised in that** it forms an electrical switch with said facade (12) which comprises a command key (15) and a support plate (16) on which the command key (15) is mounted.
